# FASCICULE DE BREVET EUROPEEN

(11) **EP 2 911 864 B1**
(45) Date de publication et mention de la délivrance du brevet: **05.12.2018**
(21) Numéro de dépôt: 13785520.1
(22) Date de dépôt: 08.10.2013
(51) Int. Cl.: B29C 70/38, B29C 35/02, B29C 35/16, B29B 15/10, C08J 5/24, B29K 101/10, B29K 105/08

(54) **PROCÉDÉ DE RÉALISATION DE PIÈCES EN COMPOSITE THERMODURCISSABLES PAR PLACEMENT DE FIBRES DE MATÉRIAU PRÉIMPRÉGNÉ**
VERFAHREN ZUR HERSTELLUNG VON BAUTEILEN AUS EINEM DUROPLAST DURCH VERLEGUNG VON FASERN AUS VORIMPRÄGNIERTEM MATERIAL
METHOD FOR PRODUCING PARTS MADE OF THERMOSETTING COMPOSITE BY LAYING OF FIBRES OF PREIMPREGNATED MATERIAL

(30) Priorité: 08.10.2012 FR 1259551
(43) Date de publication de la demande: 02.09.2015
(73) Titulaire: AIRBUS (SAS), 31700 Blagnac (FR)
(72) Inventeur: CAVALIERE, Frédérick, F-78180 Montigny Le Bretonneux (FR); RENONCOURT, Alain, F-92240 Malakoff (FR); LEFEBURE, Patrice, F-44700 Orvault (FR)
(74) Mandataire: Gicquel, Olivier Yves Gérard
(86) Numéro de dépôt international: PCT/FR2013/052390
(87) Numéro de publication internationale: WO 2014/057207

(56) Documents cités:
- US-A- 4 877 820
- US-A- 5 587 041
- "Glossary of terms" In: "Composites", 1 décembre 2001 (2001-12-01), ASM International, USA, XP055032508, ISBN: 978-0-87-170703-1 pages 1113-1136, page 1115, colonne 3 page 1129, colonne 1 page 1124, colonne 3
- "METAL FOILS FOR USE WITH ORGANOSILICON-BASED CIRCUIT BOARD LAMINATES", RESEARCH DISCLOSURE, MASON PUBLICATIONS, HAMPSHIRE, GB, no. 356, 1 décembre 1993 (1993-12-01), page 798/799, XP000425406, ISSN: 0374-4353
- Dominick V Rosato ET AL: "Thermosets" In: "Plastics engineered product design", 1 janvier 2003 (2003-01-01), Elsevier, XP055065326, ISBN: 978-1-85-617416-9 pages 13-15, page 13 - page 14
- C. Y-C. Lee ET AL: "Glass transition temperature (Tg) determination of partially cured thermosetting systems", Polymer engineering and science, 1 août 1981 (1981-08-01), pages 787-791, XP055065386, Extrait de l'Internet: URL:http://onlinelibrary.wiley.com/store/1 0.1002/pen.760211208/asset/760211208_ftp.p df?v=1&t=hhkf3efx&s=dab65684cdba2c0978b781 f7137c8934adcd8123 [extrait le 2013-06-05]
- "Technologie du préimprégné" In: "Technologie du préimprégné", 1 December 1995 (1995-12-01), Ciba composites, XP055103169, pages 1-32,

## Description

La présente invention concerne le domaine des pièces en composite thermodurcissables, et plus particulièrement un procédé de fabrication de telles pièces par placement de fibres de matériau pré-imprégné partiellement polymérisé.

La présente invention concerne notamment les pièces en composite aéronautiques et notamment toute pièce de structure d'aéronef ou hélicoptère: fuselage, voilure, pointe avant, radôme, dérive, plans horizontaux, cellule hélico, pales, fenestron ..., mais peut également être étendu à toutes pièces en composite thermodurcissables hors domaine aéronautique.

Actuellement, les pièces composites thermodurcissables sont réalisées par placement de fibres et utilisent des mèches de fibres pré-imprégnées de résine à l'état non polymérisée. Ces matériaux sont généralement stockés à -18°C afin de maintenir la résine à un taux de polymérisation inférieur à 20%. Le procédé de drapage par placement de fibres (AFP pour « Automated Fibre Placement » selon la terminologie anglaise) est très utilisé pour les pièces complexes et/ou de grandes dimensions. Le drapage des plis est réalisé de manière automatique. Ce drapage est réalisé via une tête mécanique équipée de moyens d'alimentation et de découpe des mèches, de moyens de chauffe et de pression. Le matériau est chauffé juste avant la dépose afin d'augmenter la pégosité de la résine lors du drapage des différentes fibres les unes sur les autres. L'application de la pression sur les plis est réalisée via un rouleau presseur.

L'inconvénient de ces types de techniques est qu'elles nécessitent la réalisation de compactages intermédiaires sous vide dès que quelques couches sont drapées, par exemple toutes les 5 ou 6 couches. En effet, malgré l'application de la pression lors du drapage, de l'air est emprisonné lors du drapage. Le compactage intermédiaire permet ainsi d'évacuer en partie cet air emprisonné aux interplis lors du drapage et d'assurer un maintien correct des différentes couches du stratifié entre elles (action de la pégosité).

Afin de pallier ce type d'inconvénient, certains procédés utilisent un galet presseur équipé d'une sonotrode (technique UTL pour « Ultrasonic Tape Laying » selon la terminologie anglaise) afin de diminuer la quantité d'air emprisonné lors du drapage grâce aux ultrasons émis. Cependant, l'utilisation d'un tel procédé diminue la vitesse de dépose et donc baisse la productivité, et n'empêche pas totalement la nécessité de compactages intermédiaires.

Les compactages intermédiaires sont très coûteux en temps, compliquent le procédé et le dispositif utilisé, et ne suppriment pas la nécessité de polymériser la pièce sous pression en autoclave afin d'assurer une bonne tenue de la matière de la pièce finale.

Le document US4,877,820 divulgue un procédé de fabrication d'un matériau pré-imprégné partiellement polymérisé avec de la résine organohydrosiloxane.

La présente invention a donc pour objet de pallier un ou plusieurs des inconvénients de l'art antérieur en proposant un procédé de réalisation de pièce composites thermodurcissables par placement de fibres de matériau pré-imprégné sous forme de mèches qui permet de diminuer la quantité d'air emprisonné lors du drapage sans dégrader la vitesse de dépose, de supprimer les compactages intermédiaires et permet dans certains cas de réaliser l'étape de polymérisation finale hors autoclave.

Pour cela la présente invention propose un procédé de fabrication d'un matériau pré-imprégné partiellement polymérisé, ledit procédé comportant une étape d'imprégnation de fibres avec de la résine thermodurcissable et une étape de polymérisation partielle de la résine à un taux compris entre 20% et 60%. Préférentiellement, la polymérisation partielle de la résine est réalisée à un taux compris entre 20% et 50%.

*Selon différents modes de réalisation de l'invention, l'étape d'imprégnation des fibres est réalisée avant ou après l'étape de polymérisation partielle de la résine.

L'invention se rapporte également à un matériau pré-imprégné partiellement polymérisé, susceptible d'être obtenu par le procédé tel que décrit ci-dessus. Un tel matériau peut être stocké à la température ambiante, de l'ordre de 20°C, pendant une longue période de l'ordre de plusieurs mois.

Selon un mode de réalisation de l'invention, le matériau est constitué d'une multicouche de résines partiellement polymérisées.

L'invention se rapporte également à un procédé de réalisation de pièces composites thermodurcissables par placement de fibres du matériau pré-imprégné partiellement polymérisé décrit ci-dessus, ledit procédé comportant :
- une étape de dépose du matériau sous forme de mèches,
- une étape de chauffage du matériau déposé, à une température supérieure à la température de transition vitreuse de l'état pré-imprégné considéré,
- une étape de pressage du matériau déposé,
- une étape de refroidissement du matériau déposé, permettant de revenir à une température inférieure à la température de transition vitreuse de l'état pré-imprégné considéré,
les températures des étapes de chauffage et refroidissement et la pression de l'étape de pressage étant déterminées de façon à ce que la pièce obtenue comporte un taux de porosité inférieur à 4% en volume.

Selon différents modes de réalisation de l'invention, l'étape de chauffage est réalisée immédiatement avant l'étape de pressage ou simultanément à l'étape de pressage.

Selon différents modes de réalisation de l'invention, l'étape de refroidissement est réalisée immédiatement après l'étape de pressage ou simultanément à l'étape de pressage.

Selon un mode de réalisation de l'invention, une étape de polymérisation finale est réalisée en étuve.

Selon un mode de réalisation de l'invention, le procédé comprend une première étape de stockage du matériau pré-imprégné à température ambiante.

### Description détaillée

La présente invention concerne un procédé de réalisation de pièces composites thermodurcissables par drapage de plis d'un nouveau matériau pré-imprégné ayant préalablement subi un cycle de polymérisation partielle, également appelé matériau pré-imprégné mi-cuit.

Plus précisément, l'invention concerne le placement de mèches d'un nouveau matériau pré-imprégné ayant préalablement subi un cycle de polymérisation partielle. Les mèches sont sous forme de ruban étroit ce qui permet un pilotage indépendant de la dépose et de la découpe des mèches, et facilite l'obtention de formes plus complexes. Ainsi, les fibres sous forme de mèche se manipulent aisément, et permettent un placement précis. Les mèches utilisées dans le cadre de la présente invention, pré-imprégnées de résine partiellement polymérisée présentent un aspect rigide et sec, sans pégosité. La résine est à l'état solide. La relaxation à température ambiante d'un tel matériau est très faible, c'est à dire qu'on observe une très faible diminution dans le temps des contraintes internes sous une déformation constante. Cette relaxation est d'autant plus faible que le taux de pré polymérisation est élevé.

L'étape de placement, qui est également une étape de drapage, réalisée dans le procédé selon l'invention, est de façon préférentielle automatique.

Le placement automatique consiste à utiliser une machine qui réalise elle-même la dépose simultanée de plusieurs mèches et la découpe de ces mèches.

Lors de l'étape de placement, le matériau est chauffé simultanément de façon à permettre l'accroche des mèches entre elles, et pressé par un moyen de compression et par exemple par un rouleau ou tout autre moyen équivalent.

Plus précisément, le chauffage est réalisé à l'interface des mèches déjà déposées et des mèches déposées au moment du placement, sur toute l'interface.

Le chauffage est réalisé par toutes méthodes connues de l'homme du métier et par exemple par torche, radiant, laser, infrarouge....

Selon une variante de l'invention, le chauffage est réalisé par l'intermédiaire du moyen de compression qui exerce la pression sur les mèches.

Selon une variante de l'invention, un second chauffage est réalisé par l'intermédiaire d'un second moyen de compression ou rouleau utilisé après le passage du premier rouleau.

Lors du chauffage, l'état de viscosité du matériau pré-imprégné est très proche de celui d'un matériau non-polymérisé. Cet état permet l'accroche des mèches entre elles.

Lors du placement, la pression exercée par le moyen de compression est supérieure à 1.10⁵ Pa (1 bar) et permet donc de supprimer les compactages intermédiaires réalisés à température ambiante sous vide, car par le procédé selon l'invention, à température ambiante le stratifié est à l'état rigide et sec et ne flue pas.

Selon un mode de réalisation de l'invention, la pression peut être relativement proche, voire supérieure, de celle appliquée habituellement en autoclave, et de préférence supérieure à 7.10⁵ Pa (7 bars). Lors du cycle de polymérisation le vide doit être atteint avant la montée en température pour ne pas dégrader le taux de cavité très faible du matériau.

Le matériau est refroidi immédiatement après le passage du moyen ou rouleau de compression afin de figer le matériau. Les couples chauffage/pression et pression/refroidissement du matériau pré-imprégné sont définis de façon à ce que les plis présentent l'accroche nécessaire les uns par rapport aux autres après passage du rouleau. La pression à chaud associée à une bonne fluidité à chaud de la résine, au figeage sous pression et à la très faible relaxation de la résine une fois refroidie permet d'obtenir et maintenir un taux de cavité très faible.

Lorsque l'étape de drapage est terminée, la polymérisation finale du matériau formant la pièce obtenue peut être réalisée en étuve si le taux de porosités est suffisamment faible; et en autoclave dans le cas contraire.

Les différents paramètres du procédé et plus précisément :
- le taux de pré-polymérisation du matériau mi-cuit considéré,
- la température de chauffage du matériau au moment du drapage qui doit être supérieure à la température de transition vitreuse du matériau mi-cuit considéré, la température de transition vitreuse étant définie comme représentant l'intervalle de température à travers lequel la matière passe d'un état caoutchouteux à un état vitreux, solide, rigide, cette température de transition vitreuse du matériau mi-cuit est préférentiellement comprise entre 20°C et 150°C. Cette température dépend du taux de pré-polymérisation,
- la pression du rouleau,
- la température à la sortie du rouleau, qui doit être très rapidement inférieure à la température de transition vitreuse du matériau mi-cuit considéré,
- le type de chauffage, qui peut être laser, infra-rouge, air chaud ou autre,
sont déterminés de façon à ce que le stratifié obtenu comporte un taux de porosités inférieur ou égale à 4% en volume. L'absence de porosité ou un taux de porosités très faible autorise dans certains cas une polymérisation finale en étuve, au lieu de réaliser une polymérisation en autoclave comme cela est le cas pour les techniques de l'art antérieur. Si une mise sous vide du stratifié mi-cuit lors de la polymérisation finale est réalisée, le niveau de vide requis peut de manière préférentielle être atteint avant que la température ne dépasse la température de transition vitreuse du matériau mi-cuit considéré.

Plus précisément, la température de chauffage pendant le drapage est supérieure à la température de transition vitreuse du matériau mi cuit et inférieure ou égale à 250°C.

La température de transition vitreuse est mesurée par analyse calorimétrique différentielle (DSC) selon la norme ISO 11357-2, suivant la méthode du point d'inflexion. Cette mesure de Tg est réalisée sur le matériau pré-imprégné partiellement polymérisé avant drapage.

La température de refroidissement est inférieure à la température de transition vitreuse du matériau mi cuit et supérieure ou égale à 20°C.

La maîtrise de l'accroche ponctuelle est rendue possible par le fait que le matériau utilisé dans le cadre du procédé selon l'invention est mi-cuit.

Dans le cadre de l'invention, on entend par matériau partiellement polymérisé ou mi-cuit, un matériau ayant subi un cycle de polymérisation partielle et dont le taux de polymérisation est compris entre 20 et 60%, et de préférence entre 20 et 50%. De manière préférentielle le taux de polymérisation doit rester en dessous du point de gel du matériau. Le taux de polymérisation est choisi également pour permettre le stockage du matériau à la température ambiante, de l'ordre de 20°C, pendant une longue période de l'ordre de plusieurs mois, voire années.

Le taux de polymérisation est mesuré par analyse calorimétrique différentielle (DSC) selon la norme ISO 11357-5. Le taux de polymérisation est calculé avant drapage à partir de l'enthalpie de réaction du matériau testé partiellement polymérisé et de l'enthalpie de réaction du même matériau non polymérisé et servant de référence.

Le nouveau matériau pré-imprégné partiellement polymérisé utilisé dans le procédé de la présente invention peut être obtenu par différentes méthodes de fabrication du matériau.

Une première méthode de fabrication du matériau consiste à réaliser dans un premier temps une pré-imprégnation classique des fibres de type carbone, verre ou toutes autres fibres pouvant être utilisées pour la réalisation de structures. Les résines d'imprégnation pourront être de type époxyde, cyanate, benzoxazine. Ces fibres imprégnées sont ensuite mises sous séparateurs et enroulées autour d'un mandrin. Les bobines formées par les fibres pré-imprégnées et enroulées sont ensuite mi-cuites, c'est-à-dire polymérisées partiellement, avec des températures qui dépendent de la réactivité de la résine considérée mais qui sont comprises entre 50°C et 180°C avec des temps pouvant être compris entre quelques minutes à quelques heures,. Il est nécessaire pendant ce procédé de vérifier que les séparateurs sont compatibles avec les températures de mi-cuisson, qu'ils ne polluent pas le pré-imprégné pendant la phase de mi-cuisson, que le taux de polymérisation est bien le même partout (+/- epsilon). Ce procédé présente l'avantage de peu modifier le mode de réalisation déjà connu des pré-imprégnés.

Une autre méthode de fabrication du matériau consiste à pré-imprégner des fibres dans de la résine préalablement partiellement polymérisée et maintenue à une température supérieure à la température de transition vitreuse du matériau mi-cuit durant la phase d'imprégnation, de calandrage, et si nécessaire pendant la phase d'insertion de nodules thermoplastiques en surfaces du pré-imprégné si ce dernier le nécessite. De préférence, le matériau est maintenu à la température de viscosité la plus faible. Ce procédé présente l'avantage d'une bonne maîtrise du taux de polymérisation partielle, permet de conserver un bon alignement des fibres, permet de moins introduire de contraintes dans le matériau mi-cuit ce qui peut faciliter sa manipulation, et surtout permet de supprimer les séparateurs.

Une autre méthode de fabrication du matériau, qui est un mélange des deux précédentes, consiste à réaliser une pré-imprégnation de fibres dans un bain de résine éventuellement partiellement pré-polymérisée. Ces fibres pré-imprégnées subissent ensuite un cycle de mi-cuisson afin d'amener le matériau pré-imprégné au taux de polymérisation requis, avant ou après le bobinage sur mandrin.

Dans toutes les méthodes de fabrication du matériau, la polymérisation partielle est réalisée à chaud ou de toute autre manière permettant la polymérisation, et par exemple sous l'action de micro-ondes, de polymérisation par bombardement d'électrons, ...

Avec ces types de méthodes de fabrication du matériau, l'énergie dépensée pour la mi-cuisson du matériau (quelques heures à des températures de 50°C à 180°C) est bien plus faible que l'énergie dépensée pour le stocker à -18°C sur de longues durées pouvant atteindre plusieurs mois comme cela est le cas dans l'art antérieur.

Selon une variante le matériau pré-imprégné est constitué d'une multicouche de résines, c'est-à-dire plusieurs résines, choisies parmi les types de résines décrits précédemment. Les résines sont soit des résines de type différents compatibles entre elles avec un même taux de polymérisation, soit un même type de résine avec des taux de polymérisation différents, compris préférentiellement dans la fourchette 10% - 60%, soit un mélange de résines de types différents et avec des taux de polymérisation différents.

Selon un mode de réalisation, un pré-imprégné multicouche est réalisé avec une première résine avec un taux de polymérisation suffisamment avancé pour assurer une bonne tenue de la matière à coeur du pli, taux de polymérisation pouvant dans ce cas être supérieur à 60%, et une deuxième résine en surfaces du pli pour améliorer la drapabilité. Une meilleure fluidité de la résine à la température de drapage favorisant un bon étalement de la résine et donc une diminution des porosités aux interplis. Un tel matériau est par exemple réalisé par imprégnations successives dans différents bains de résines.

Selon un mode de réalisation de l'invention, l'aspect de surface du matériau est lisse, ce qui favorise la non création des porosités lors du drapage.

Selon un mode de réalisation de l'invention, le matériau présente des motifs particuliers et par exemple des canaux de formes diverses, peu profonds ou traversant l'épaisseur, parallèles ou croisés, avec une surface lisse entre les canaux, de manière à favoriser/faciliter le drainage de l'air dans le cas où il resterait des porosités aux interplis.

Le matériau partiellement polymérisé utilisé dans le cadre de l'invention est ainsi un matériau stable dans le temps, stockable à température ambiante et dont la polymérisation est réactivable simplement à tout moment par exemple par chauffage.

Ce matériau possède :
- un taux d'imprégnation compris entre 25% et 75% en volume de résine,
- un taux de polymérisation compris entre 20% et 60%, quelle que soit sa présentation,
- une présentation permettant sa manipulation manuelle ou avec une machine,
- un état de surface facilitant la suppression des porosités et donc adapté au procédé de drapage selon l'invention.

Selon une variante, le procédé de réalisation de pièces composites thermodurcissables selon l'invention comprend ainsi une étape de fabrication du matériau pré-imprégné et partiellement polymérisé telle que précédemment décrite.

Le procédé de réalisation de pièces composites thermodurcissables selon l'invention présente ainsi les avantages suivants :
- la résine partiellement polymérisée des plis pré-imprégnés présente un aspect localement rigide et sec, sans pégosité, et se stocke à la température ambiante,
- les compactages intermédiaires à la température ambiante sont supprimés,
- le stratifié mi-cuit réalisé avec le procédé selon l'invention est rigide et stable dans le temps à la température ambiante, c'est-à-dire que le taux de polymérisation n'évolue pas. Le stratifié peut ainsi se stocker à la température ambiante ;
- le fait de polymériser partiellement le matériau permet d'évacuer les solvants pendant cette phase de polymérisation partielle et cela même avec des matériaux imprégnés par enduction par extrusion (fusion) à chaud (ou « *hot melt* » selon la terminologie anglaise),
- le fait que le matériau soit déjà partiellement polymérisé permet d'adapter le cycle de polymérisation finale avec une possible réduction de la durée,
- lors du cycle de polymérisation finale, le fait d'avoir réalisé un stratifié mi-cuit avec très peu de porosités peut autoriser le passage en étuve plutôt qu'en autoclave.

Selon une variante de l'invention, en fonction du matériau utilisé, du taux de pré polymérisation et du taux de porosités du stratifié considéré, le passage en étuve peut être réalisé sans vide d'air.

### Exemple de réalisation de l'invention

Un panneau courbe de type fuselage est réalisé selon les étapes suivantes :
- Pré-polymérisation d'un matériau carbone/Epoxy classe 180 à un taux d'environ 40% ;
- Stockage du matériau à température ambiante d'environ 21 °C ;
- Dépose du matériau sous forme de mèches, 12 plis croisés de Carbone/Epoxy, grade 134g/m² ;
- Lors de la dépose, chauffage du matériau par laser sur toute l'interface qui sera pressée par le rouleau, à une température de l'ordre de 150°C ;
- La phase de chauffage est immédiatement suivie d'une phase de pressage par un rouleau ;
- La pression du rouleau lors de la phase de pressage est voisine de 7 bars ;
- Le refroidissement a lieu en partie lors du pressage et se termine immédiatement après le passage du rouleau ;
- Polymérisation finale à une température de 180°C pendant 2h.

Les figures 1, 2 et 3 illustrent les évolutions des paramètres suivants en fonction du temps :
- Figure 1 : évolution du taux de pré-polymérisation avant et après dépose ;
- Figure 2 : Evolution des paramètres pression, température et viscosité au cours de la dépose ;
- Figure 3 : évolution du taux de polymérisation au cours du cycle de polymérisation finale.

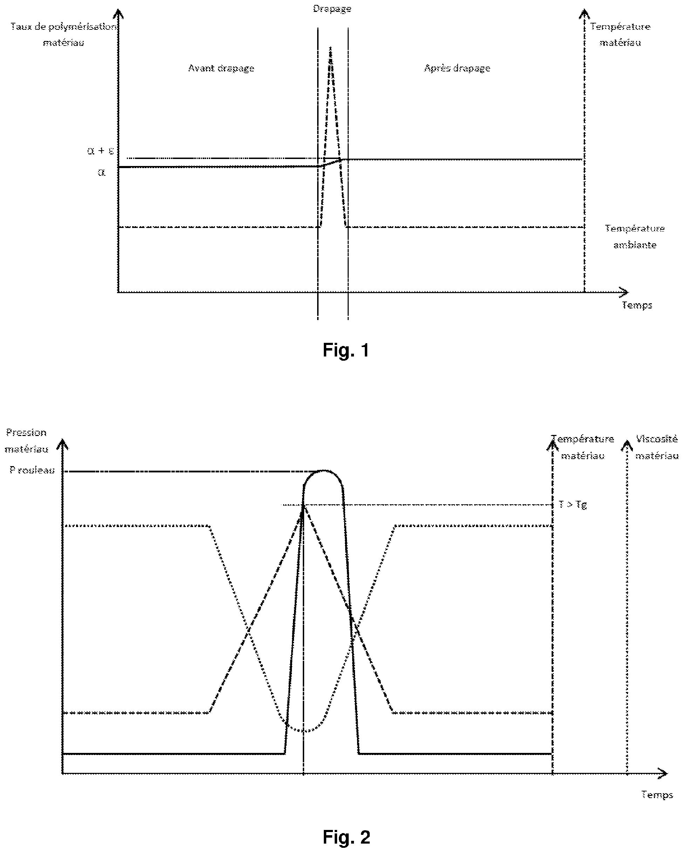

La figure 1 illustre la très faible augmentation du taux de pré-polymérisation du matériau au cours de la dépose. Si le taux avant dépose avait une valeur « alpha », la valeur après dépose sera « alpha + epsilon ». La phase de dépose est représentée par le pic de température.

La figure 2 illustre les phases suivantes :
- L'augmentation de température intervient immédiatement avant le passage du rouleau.
- Simultanément à la chauffe, la viscosité du matériau diminue. La résine redevient pégueuse, voire liquide.
- Une fois que le matériau a atteint une température supérieure à la température de transition vitreuse, le rouleau vient presser le matériau (augmentation de la pression sur le matériau, la sortie du rouleau est représentée par la chute de pression).
- Pendant la phase de pressage, on peut amorcer la phase de refroidissement.
- Simultanément au refroidissement, la viscosité du matériau augmente jusqu'à redevenir solide, rigide et sec.

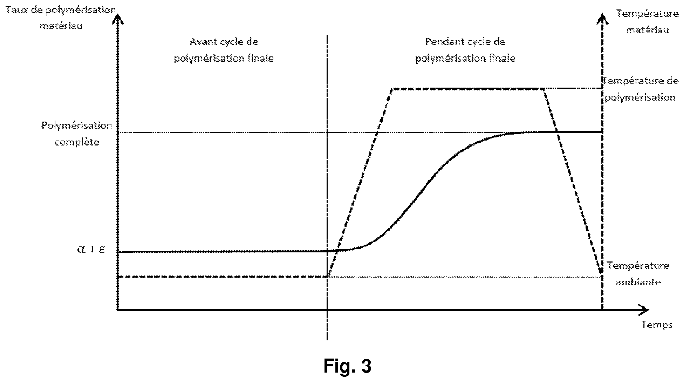

La figure 3 illustre la phase de polymérisation finale. La pièce qui a été drapée présente un taux de polymérisation « alpha + epsilon » qui n'a pas évolué depuis la dépose. Le maintien de la pièce à la température de polymérisation pendant plusieurs heures permet de polymériser complètement la pièce.

## Revendications

1. Procédé de réalisation de pièces composites thermodurcissables par placement de fibres d'un matériau pré-imprégné partiellement polymérisé susceptible d'être obtenu à partir d'un procédé de fabrication d'un matériau pré-imprégné partiellement polymérisé, ledit procédé de fabrication comportant :
- une étape d'imprégnation de fibres avec de la résine thermodurcissable,
- une étape de polymérisation partielle de la résine à un taux compris entre 20 et 60%, à une température comprise entre 50 et 180°C, pour obtenir le pré-imprégné partiellement polymérisé qui peut être stocké à température ambiante, la résine thermodurcissable étant de type époxyde, cyanate ou benzoxazine ;
et ledit procédé de réalisation comportant :
- une étape de dépose du matériau sous forme de mèches,
- une étape de chauffage du matériau déposé, à une température supérieure à la température de transition vitreuse de l'état pré-imprégné considéré,
- une étape de pressage du matériau déposé,
- une étape de refroidissement du matériau déposé, permettant de revenir à une température inférieure à la température de transition vitreuse de l'état pré-imprégné considéré,
les températures des étapes de chauffage et refroidissement et la pression de l'étape de pressage étant déterminées de façon à ce que la pièce obtenue comporte un taux de porosité inférieur à 4% en volume.

2. Procédé selon la revendication 1, dans lequel l'étape d'imprégnation des fibres est réalisée avant l'étape de polymérisation partielle de la résine.

3. Procédé selon la revendication 1, dans lequel l'étape de polymérisation partielle de la résine est réalisée avant l'étape d'imprégnation des fibres.

4. Procédé selon l'une des revendications 1 à 3, dans lequel le matériau préimprégné est constitué d'une multicouche de résines partiellement polymérisées.

5. Procédé selon l'une des revendications 1 à 4, dans lequel l'étape de chauffage est réalisée immédiatement avant l'étape de pressage.

6. Procédé selon l'une des revendication 1 à 4, dans lequel l'étape de chauffage et l'étape de pressage sont réalisées simultanément.

7. Procédé selon l'une des revendications 1 à 6, dans lequel l'étape de refroidissement est réalisée immédiatement après l'étape de pressage.

8. Procédé selon l'une des revendications 1 à 6, dans lequel l'étape de pressage et l'étape de refroidissement sont réalisées simultanément.

9. Procédé selon l'une des revendications 1 à 8, dans lequel une étape de polymérisation finale est réalisée en étuve.

## Patentansprüche

1. Verfahren zum Herstellen von wärmehärtbaren Bauteilen durch Legen von Fasern eines teilweise polymerisierten Prepregmaterials, das aus einem Verfahren zum Herstellen eines teilweise polymerisierten Prepregmaterials erhalten werden kann, wobei das Herstellungsverfahren umfasst:
- einen Schritt zum Imprägnieren von Fasern mit wärmehärtbarem Harz,
- einen Schritt zum teilweisen Polymerisieren des Harzes bis zu einem Polymerisationsgrad im Bereich zwischen 20 und 60 % bei einer Temperatur im Bereich zwischen 50 und 180 °C, um das teilweise polymerisierte Prepreg zu erhalten, das bei Umgebungstemperatur gelagert werden kann, wobei das wärmehärtbare Harz vom Typ Epoxid, Cyanat oder Benzoxazin ist;
und wobei das Fertigungsverfahren umfasst:
- einen Schritt zum Ablegen des Materials in Form von Strängen,
- einen Schritt zum Erwärmen des abgelegten Materials auf eine Temperatur oberhalb der Glasübergangstemperatur des entsprechenden vorimprägnierten Zustands,
- einen Schritt zum Pressen des abgelegten Materials,
- einen Schritt zum Abkühlen des abgelegten Materials, der es erlaubt, auf eine Temperatur unterhalb der Glasübergangstemperatur des entsprechenden vorimprägnierten Zustands zurückzukehren,
wobei die Temperaturen der Schritte zum Erwärmen und Abkühlen und zum Pressen des Schritts zum Pressen derart bestimmt werden, dass das erhaltene Bauteil einen Porositätsgrad von weniger als 4 Vol.-% aufweist.

2. Verfahren nach Anspruch 1, wobei der Schritt zum Imprägnieren der Fasern vor dem Schritt zum teilweisen Polymerisieren des Harzes durchgeführt wird.

3. Verfahren nach Anspruch 1, wobei der Schritt zum teilweisen Polymerisieren des Harzes vor dem Schritt zum Imprägnieren der Fasern durchgeführt wird.

4. Verfahren nach einem der Ansprüche 1 bis 3, wobei das Prepregmaterial aus einer Schicht aus mehreren teilweise polymerisierten Harzen besteht.

5. Verfahren nach einem der Ansprüche 1 bis 4, wobei der Schritt zum Erwärmen unmittelbar vor dem Schritt zum Pressen durchgeführt wird.

6. Verfahren nach einem der Ansprüche 1 bis 4, wobei der Schritt zum Erwärmen und der Schritt zum Pressen gleichzeitig durchgeführt werden.

7. Verfahren nach einem der Ansprüche 1 bis 6, wobei der Schritt zum Abkühlen unmittelbar nach dem Schritt zum Pressen durchgeführt wird.

8. Verfahren nach einem der Ansprüche 1 bis 6, wobei der Schritt zum Pressen und der Schritt zum Abkühlen gleichzeitig durchgeführt werden.

9. Verfahren nach einem der Ansprüche 1 bis 8, wobei ein letzter Schritt zum Polymerisieren im Ofen durchgeführt wird.

## Claims

1. Process for producing thermosetting composite parts by placement of fibers of a partially polymerized prepreg material capable of being obtained by a process for fabricating a partially polymerized prepreg material, said fabrication process comprising:
- a step of impregnating fibers with thermosetting resin,
- a step of partially polymerizing the resin to a degree of polymerization of between 20% and 60%, at a temperature of between 50 and 180°C, in order to obtain the partially polymerized prepreg which can be stored at ambient temperature, the thermosetting resin being of epoxide, cyanate or benzoxazine type;
and said production process comprising:
- a step of laying-up the material in the form of rovings,
- a step of heating the laid-up material, at a temperature above the glass transition temperature of the prepreg state in question,
- a step of pressing the laid-up material,
- a step of cooling the laid-up material, making it possible to return to a temperature below the glass transition temperature of the prepreg state in question, the temperatures of the heating and cooling steps and the pressure of the pressing step being determined so that the part obtained has a void content of less than 4% by volume.

2. Process according to Claim 1, wherein the step of impregnating the fibers is carried out before the step of partially polymerizing the resin.

3. Process according to Claim 1, wherein the step of partially polymerizing the resin is carried out before the step of impregnating the fibers.

4. Process according to one of Claims 1 to 3 wherein the prepreg material consists of a multilayer of partially polymerized resins.

5. Process according to one of Claims 1 to 4, wherein the heating step is carried out immediately before the pressing step.

6. Process according to one of claims 1 to 4, wherein the heating step and the pressing step are carried out simultaneously.

7. Process according to one of Claims 1 to 6, wherein the cooling step is carried out immediately after the pressing step.

8. Process according to one of Claims 1 to 6, wherein the pressing step and the cooling step are carried out simultaneously.

9. Process according to one of Claims 1 to 8, wherein the final polymerization step is carried out in an oven.
